# EUROPEAN PATENT SPECIFICATION

(11) **EP 1 308 956 B1**
(45) Date of publication and mention of the grant of the patent: **27.04.2005**
(21) Application number: 02257316.6
(22) Date of filing: 22.10.2002
(51) Int. Cl.: G11B 27/10

(54) **Method and apparatus for reproducing contents from information storage medium in interactive mode**
Verfahren und Vorrichtung zur Wiedergabe von Inhalten von einem Informationsspeichermedium in einem interaktiven Modus
Procédé et dispositif de reproduction de contenus d'un moyen de mémorisation d'information dans un mode interactif

(30) Priority: 23.10.2001 KR 2001065391; 12.01.2002 KR 2002001887; 17.05.2002 KR 2002027341; 24.09.2002 KR 2002057813
(43) Date of publication of application: 07.05.2003
(73) Proprietor: SAMSUNG ELECTRONICS CO., LTD., Suwon-City, Kyungki-do (KR)
(72) Inventor: Chung, Hyun-kwon, Gwangju-gun, Gyeonggi-do (KR); Ko, Jung-wan 315-401 Cheongmyung Maeul 3-danji, Gyeonggi-do 442-470 (KR)
(74) Representative: Robinson, Ian Michael

(56) References cited:
- EP-A- 0 762 422
- EP-A- 0 886 276
- WO-A-00/63915
- US-A- 6 047 292

## Description

The present invention relates to a method and apparatus for reproducing contents, which are recorded on an image storage medium, in an interactive mode.

There have been proposed interactive digital versatile discs (DVDs) from which contents can be reproduced in an interactive mode based on a personal computer (PC). Interactive DVDs are DVDs on which a markup document is recorded together with audio/video (AV) data. The AV data can be reproduced from interactive DVDs in two kinds of modes: a video mode in which the AV data is displayed in the same manner as AV data is reproduced from normal DVDs, and an interactive mode in which reproduced AV data is displayed on a display window that is defined by a markup document. A display screen displayed in the interactive mode is referred to as an interactive screen.

WO 00/63915 discloses a system integrating a DVD system and a web browser, wherein when the user actuates a DVD element that has a corresponding URL, the web browser displays information from that site. The claims appended hereto have been characterised over this document.

EP 0 998 145 discloses a method of broadcasting interactive applications, wherein set up data as such as an executable programme file is broadcast across a transmission medium to a user interface before data of a scheduled programme is broadcast to the user interface.

When a user selects an interactive mode, a browser installed in a PC interprets and displays a markup document that is recorded on an interactive DVD. AV data selected by the user is displayed on a display window defined by a markup document. A representative markup document is a HyperText Markup Language (HTML) document. For example, when AV data is a movie, a moving picture is displayed on an HTML display window in the markup document, and additional information, such as a script, a synopsis, or pictures of actors and actresses, about the movie may be displayed on the remaining area of the markup document. Additional information may be displayed in synchronization with a title (i.e., AV data). For example, when a particular actor or actress appears, a markup document containing his/her background information is called and displayed.

However, since information for supporting an interactive function is not recorded on a conventional DVD-video, AV data recorded on the DVD-video cannot be reproduced in an interactive mode. In other words, contents that are recorded on an information storage medium, on which information for supporting an interactive function is not recorded, cannot be reproduced in an interactive mode. Moreover, even if a disc supports the interactive mode, content displayed on an interactive screen cannot be updated.

It is an aim of the present invention to provide a method and apparatus for reproducing contents from an information storage medium, in an interactive mode, even when information necessary for reproducing the contents in an interactive mode is not recorded on the information storage medium itself.

Another aim of at least preferred embodiments of the present invention is to provide a method and apparatus for reproducing contents from a disc, which does not support an interactive function, in an interactive mode.

Another aim of the preferred embodiments of the present invention is to provide a method and apparatus for updating content that is displayed on a markup document screen during reproduction of the content in an interactive mode.

Yet another aim of at least preferred embodiments of the present invention is to provide a method and apparatus for reading text data information linked to a markup document during reproducing in an interactive mode.

According to the present invention there is provided a method and apparatus as set forth in the appended claims. Preferred features of the method and apparatus will be apparent from the dependent claims, and the description which follows.

In one aspect of the present invention there is provided a method of reproducing content from an information storage medium, comprising the steps of: reproducing the content from the information storage medium; characterised by: (a) receiving reproducing control information, which is necessary for reproducing the content in an interactive mode, from Internet; and (b) reproducing the content from the information storage medium in the interactive mode according to the received reproducing control information.

Preferably, the step (a) comprises the steps of: (a1) determining whether the reproducing control information for reproducing the content in the interactive mode has been recorded on the information storage medium; and (a2) requesting and receiving the reproducing control information from a predetermined server apparatus when it is determined that the information has not been recorded on the information storage medium.

Preferably, the step (a2) includes the steps of: (a21) transmitting an identifier of the content to the server apparatus; and (a22) receiving at least one among a reproducing control file and a markup document, which correspond to the identifier from the server apparatus.

Also according to the present invention there is provided a method of reproducing a video title from a disc in an interactive mode. The method includes the steps of: (a) requesting and receiving reproducing control information, which is necessary for reproducing the video title in the interactive mode, from Internet; and (b) reproducing the video title in the interactive mode based on the received reproducing control information.

Preferably, the step (a) includes the step of (a1) requesting and receiving a reproducing control file and a markup document, which are necessary for reproducing the video title in the interactive mode. Preferably, the step (a1) includes the steps of: (a11) transmitting an identifier of the video title to the server apparatus; and (a12) receiving the reproducing control file and the markup document which correspond to the identifier. Preferably, the step (a11) includes receiving a markup document, which contains a client execution code for recognizing the identifier of the video title, from the server apparatus.

Preferably, the step (a12) includes the steps of: (a121) receiving the markup document for downloading the reproducing control file; and (a122) reading the position of the reproducing control file that is linked to the markup document received in step (a121) and receiving the reproducing control file.

Preferably, the markup document received in step (a121) contains either a link tag that is linked to the reproducing control file or an execution code that calls application program interface (API) for download of the reproducing control file. The link tag may be used to retrieve text data. Preferably, the reproducing control file contains designation information designating that the reproducing control file is made for the purpose of reproducing control.

In a second aspect of the present invention there is provided an apparatus for reproducing content from an information storage medium, the apparatus comprising: a network data transceiver; characterised by: the network data transceiver being arranged for receiving reproducing control information which is necessary for reproducing the content in an interactive mode, from the outside through Internet, wherein the apparatus reproduces the content in the interactive mode according to the reproducing control information received through the network data transceiver.

Preferably, the reproducing control information necessary for reproducing in the interactive mode comprises a reproducing control file for reproducing the content and a markup document that is displayed together with the content, and the apparatus further comprises: a presentation engine that analyzes the reproducing control file and the markup document to perform or reproduce them; and a blender that blends the decoded content and the reproduced markup document.

The network data transceiver transmits an identifier of the content to a server apparatus and receives interactive content corresponding to the identifier from the server apparatus.

Also according to the second aspect of the present invention there is provided an apparatus for reproducing a video title from a disc in an interactive mode. The apparatus includes a network data transceiver that requests and receives the reproducing control information, which is necessary for reproducing the video title in the interactive mode, from the internet, and the video title is reproduced in the interactive mode based on the received reproducing control information.

Preferably, the network data transceiver requests and receives a reproducing control file and a markup document, which are necessary for reproducing the video title in the interactive mode, from the server apparatus.

For a better understanding of the invention, and to show how embodiments of the same may be carried into effect, reference will now be made, by way of example, to the accompanying diagrammatic drawings in which:
Figure 1 is a schematic diagram of a reproducing system according to a preferred embodiment of the present invention;
Figure 2 is a block diagram of the reproducing apparatus shown in Figure 1;
Figure 3 shows an example of the remote controller shown in Figure 1;
Figure 4 shows an example of a directory structure of a disc which supports an interactive mode;
Figure 5 is a schematic diagram explaining a procedure for reproducing contents from a disc which supports an interactive mode;
Figure 6 shows an example of a directory structure of a disc which does not support an interactive mode;
Figure 7 is a schematic diagram explaining a procedure for reproducing contents in an interactive mode from a disc, which does not support the interactive mode;
Figure 8 is a schematic diagram explaining a method of updating content displayed on an interactive mode reproducing screen;
Figure 9 is a flowchart of a reproducing method according to an embodiment of the present invention; and
Figure 10 is a flowchart of a reproducing method according to another embodiment of the present invention.

Hereinafter, preferred embodiments of the present invention will be described in detail with reference to the attached drawings. In this specification, a "markup document" generally indicates a document which is written in a markup language such as an extensible markup language (XML) or a standard generalized markup language (SGML); a source code which is written in a script language (e.g., Java script) or an execution code (e.g., Java applet); or a document which is linked to an execution code or in which an execution code is embedded. Furthermore, the "markup document" means any file, which is embedded in a markup document and used for image display. In other words, a markup document is a kind of application which is necessary for reproducing audio/video (AV) data in an interactive mode. An "interactive screen" is a screen that is displayed during reproducing in an interactive mode. In the interactive screen, an AV screen is embedded in a markup document screen. The "AV screen" indicates a screen on which AV data is reproduced and displayed so that a user can visually perceive the AV data. The "markup document screen" indicates a screen on which a markup document is reproduced and displayed so that a user can visually perceive the markup document.

A reproducing apparatus of the present invention can reproduce contents in an interactive mode from a disc of the present invention regardless of whether or not the disc supports the interactive mode. Furthermore, the reproducing apparatus of the present invention can update content on a markup document screen that is displayed together with contents recorded on the disc.

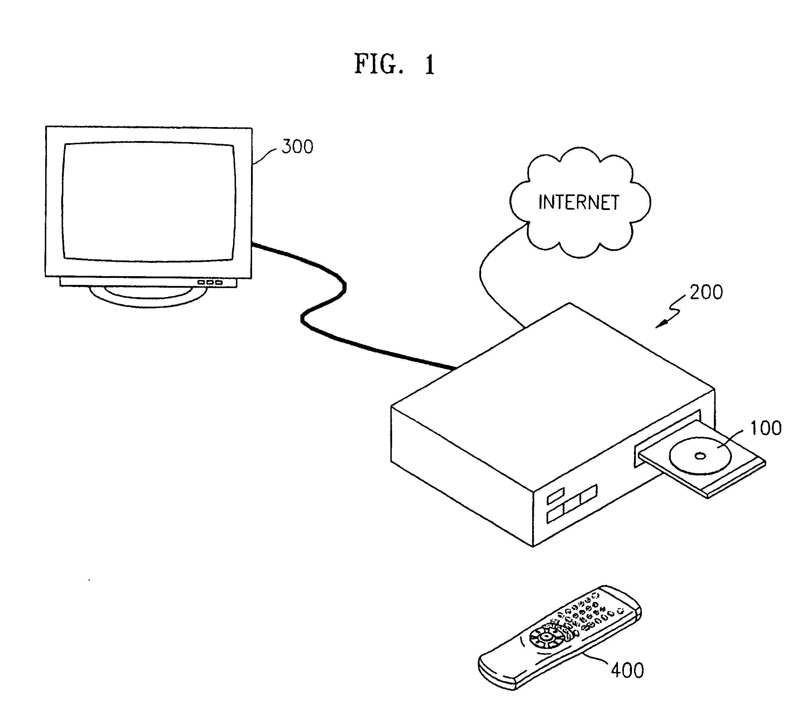

Figure 1 is a schematic diagram of a reproducing system according to a preferred embodiment of the present invention. Referring to Figure 1, the reproducing system includes a disc 100, a reproducing apparatus 200, a television (TV) 300, i.e., a display unit according to the embodiment of the present invention, and a remote controller 400. The remote controller 400 transmits a control command input by a user to the reproducing apparatus 200. When information necessary for reproducing in an interactive mode is not recorded on the disc 100, in response to the user's control command, the reproducing apparatus 200 accesses Internet, downloads necessary information, reproduces relevant contents in the interactive mode, and transmits the reproduced contents to the TV 300. In addition, according to a user's control command, the reproducing apparatus 200 accesses the Internet and downloads the new version of the contents recorded on the disc 100. The TV 300 displays contents and/or information that is received from the reproducing apparatus 200.

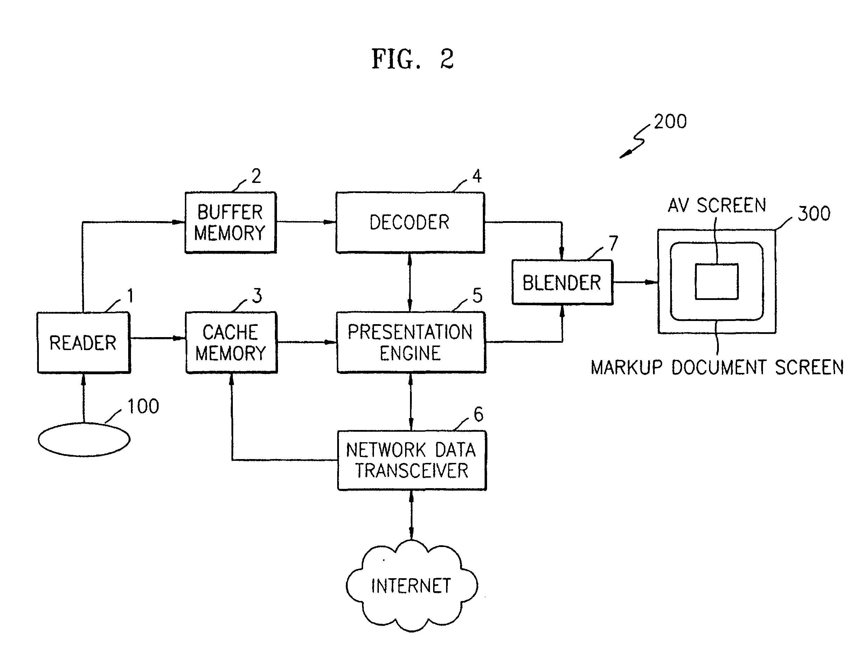

Figure 2 is a block diagram of the reproducing apparatus 200 shown in Figure 1. Referring to Figure 2, the reproducing apparatus 200 includes a reader 1, a buffer memory 2, a cache memory 3, a decoder 4, a presentation engine 5, a network data transceiver 6, and a blender 7.

The reader 1 reads data from the disc 100, i.e., a digital versatile disc (DVD), according to the present invention. The buffer memory 2 buffers the AV data read by the reader 1. The cache memory 3 caches a markup document which is either read by the reader 1 or downloaded from the Internet by the network data transceiver 6. The presentation engine 5 interprets a markup document, which is read from the cache memory 3, to check the position of a display window and display an AV data stream, which is output from the decoder 4, on the display window. The network data transceiver 6 downloads information necessary for reproducing in the interactive mode, a reproducing control file, and a markup document from the Internet when the disc 100 does not support the interactive mode. The blender 7 blends decoded AV data and a markup document and outputs the result of blending to the TV 300.

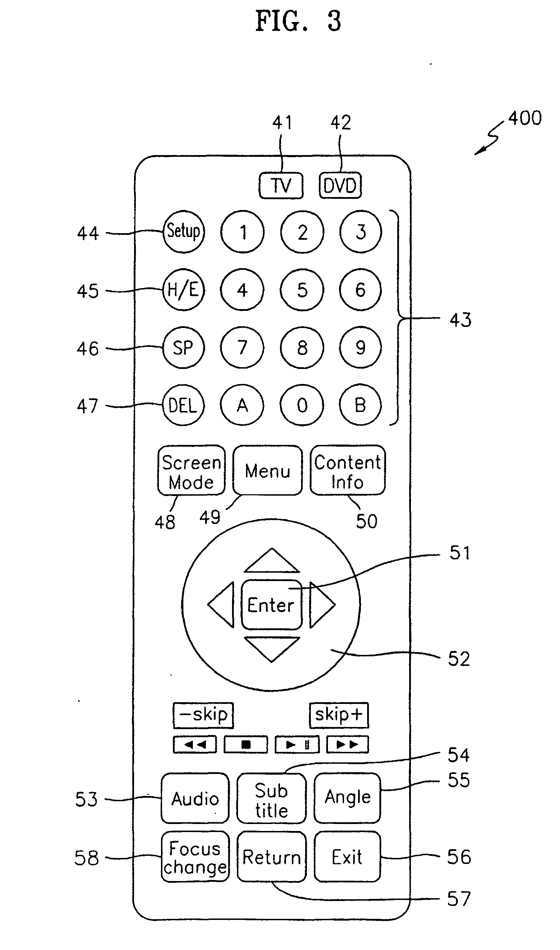

Figure 3 shows an example of the remote controller 400 shown in Figure 1. Referring to Figure 3, the remote controller 400 includes a variety of functional buttons. A TV button 41 is used for externally receiving broadcast signals to watch external broadcast programs through the TV 300. A DVD button 42 is used to view AV data, which is provided from the reproducing apparatus 200, through the TV 300. A numeral/character button group 43 for selecting a channel number is disposed in the upper front portion of the remote controller 400. A Setup 44 denotes a button for calling an On Screen Display (OSD) menu to set up the reproducing apparatus 200. An H/E 45 denotes a language conversion button. An SP 46 denotes a space button, and a DEL 47 denotes a delete button. A Screen Mode 48 denotes a button for converting a display mode on a screen, a Menu 49 denotes a button for calling a menu screen, and a Content Info 50 denotes a button for downloading predetermined information from the Internet. Reference numeral 52 denotes a group of direction keys for moving highlight information which is displayed on the display screen of the TV 300. An Enter 51 denotes a button for selecting a menu at which highlight information is positioned. When a video title is reproduced, a user can convert the language of audio using an Audio 53, convert the language of a caption using a Sub title 54, and convert the angle of a screen using an Angle 55. A Focus change 58 is used for moving current highlight information on the display screen. A Return 58 is used for movement between levels in a menu having a hierarchical structure. An Exit 56 is a button for moving from the menu screen to a video title reproducing screen. The remote controller 400 shown in Figure 3 is an example which is provided for the DVD 100 on which a video title is recorded. Accordingly, specific functional buttons and the number of the buttons may be changed. In addition, some of the functional buttons may be placed into the OSD menu. On the contrary, some of the OSD menu may be manifested as functional buttons.

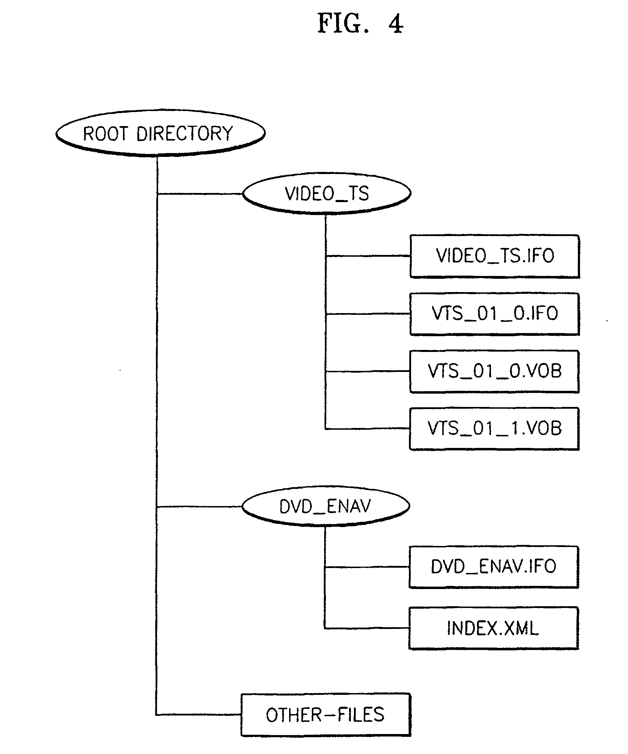

Figure 4 shows an example of a directory structure of a disc which supports an interactive mode. Referring to Figure 4, a root directory includes a video directory VIDEO_TS containing AV data. In the video directory VIDEO_TS is disposed a file VIDEO_TS.IFO which contains information for controlling reproducing all video titles. Language information that is set to a default value for the video title is recorded in the file VIDEO_TS.IFO. Behind the file VIDEO_TS.IFO is recorded a file VTS_01_0.IFO, which contains information for controlling reproducing a first video title set, and files VTS_01_0.VOB and VTS_01_1.VOB, which constitute the first video title set. The files VTS_01_0.VOB and VTS_01_1.VOB are video titles, i.e., video objects which constitute the first video title set. Each of the files VTS_01_0.VOB and VTS_01_1.VOB includes a video object unit (VOBU) which is composed of a navigation pack, a video pack, and an audio pack. The more detailed configuration of the VOBU is disclosed in a DVD-Video specification "DVD-Video for Read Only Memory Disc 1.0".

The root directory also includes an interactive directory DVD_ENAV which stores information for supporting an interactive mode. A reproducing control file DVD_ENAV.IFO is recorded in the interactive directory DVD_ENAV. For example, in the reproducing control file DVD_ENAV.IFO are recorded the definition and configuration of a relevant directory, the number of titles included in the directory, basic information about each title, information about language used in each title, reproducing control information which can replace VIDEO_TS.IFO and VTS_01_0.IFO for each title, information about caption and font, markup document display information such as resolution and color, a copyright information, and text data information produced and inserted by a content provider. For the copyright information, an International Standard Recording Code (ISRC) may be recorded. The ISRC is an international standard code used to identify music, songs, and music video and is granted by the Recording Industry Association of America (RIAA). The ISRC may be used as a video title identifier. The text data information may have a predetermined text data configuration and may be provided with predetermined application program interface API for searching text data. For example, a text data configuration proposed in Korean Patent Application No. 2001-0065392 may be used. Furthermore, in the interactive directory DVD_ENAV may be stored an initial startup markup document INDEX.XML which is displayed together with a video title or other markup documents. In addition, a file which is to be inserted into and displayed together with a markup document may be stored in the interactive directory DVD_ENAV.

In the meantime, a burst cutting area (BCA) code may be recorded on the back of a disc. The BCA code is recorded on a disc along the inner circumference in the form of a bar code in order to protect a copyright. The BCA code may be used as a disc identifier. A code (e.g., universal product code (UPC)) may be recorded as a disc identifier or a video title identifier in a different position than the BCA code and the ISRC code.

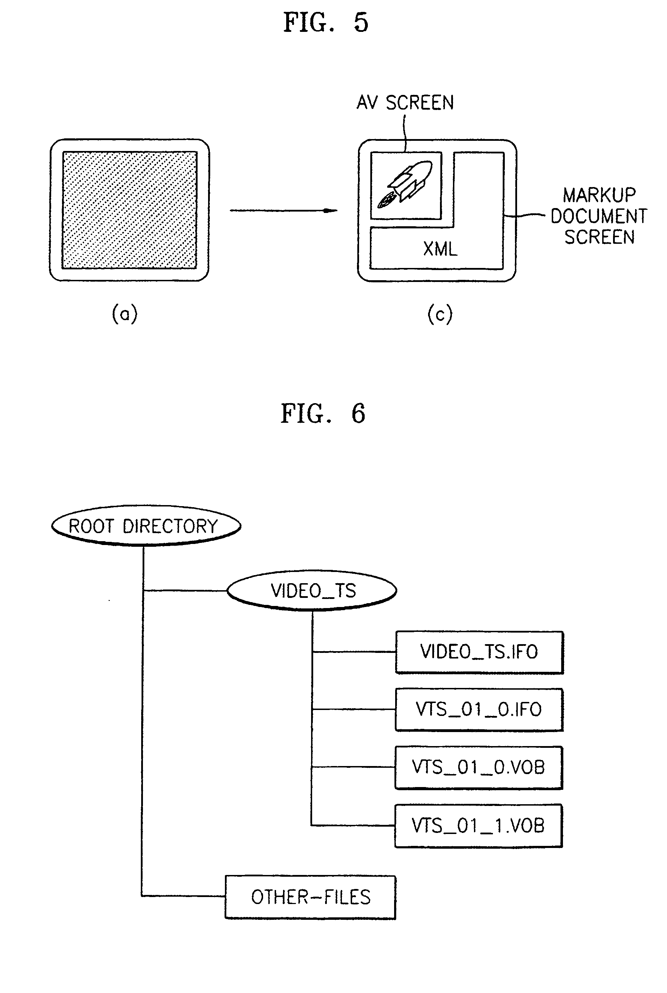

Figure 5 is a schematic diagram explaining a procedure for reproducing contents from a disc which supports an interactive mode. Referring to Figure 5, when a user insert an interactive disc into a reproducing apparatus according to the present invention, the reproducing apparatus reads the reproducing control file DVD_ENAV.IFO from the disc, analyzes the reproducing control file DVD_ENAV.IFO, and reads the initial startup markup document INDEX.XML. If the initial startup markup document INDEX.XML is linked to the reproducing control file DVD_ENAV.IFO, the reproducing apparatus reproduces a relevant video title in an interactive mode based on the link. Thus, in a state shown in Figure 5(a) in which nothing is displayed, an AV screen displaying a video title and a markup document screen displaying a markup document are simultaneously displayed in an interactive mode, as shown in Figure 5(c).

The following is an example of the initial startup markup document INDEX.XML that is read from the disc 100.

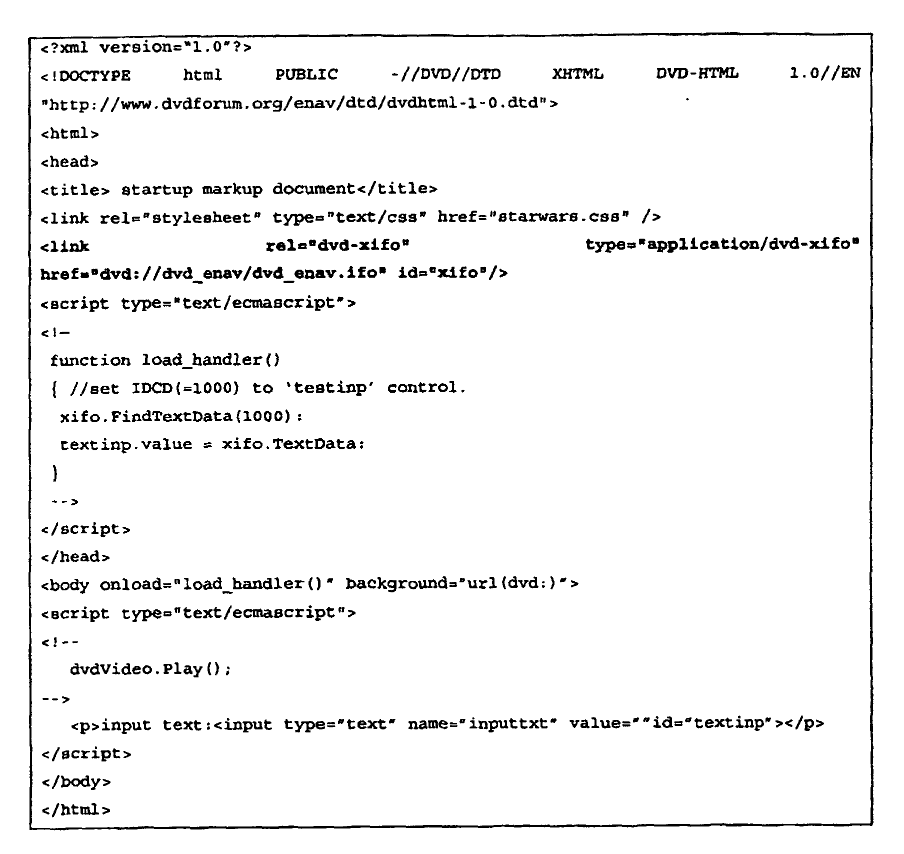

In the above source code, <link rel="did-xifo" type="application/dvd-xifo"href="dvd://dvd_enav/dvd_enav.i fo" id="xifo"/> instructs to reproduce a relevant video title based on the file DVD_ENAV.IFO recorded on the disc 100. In addition, this link tag provides a method of bringing text data within the file DVD_ENAV.IFO. For example, "xifo.FindTextData(1000):" in the above source code instructs to find a text item for which the IDCD of the file DVD_ENAV.IFO is 1000 and bring the text item to xifo.TextData. Data stored in the xifo.TextData may be read in the manner of x = xifo.TextData. By using this method for reading text data, a plurality of reproducing control files can be linked to a markup document. The following is an interface structure for script language for dealing with text data linked to an element of a link tag.

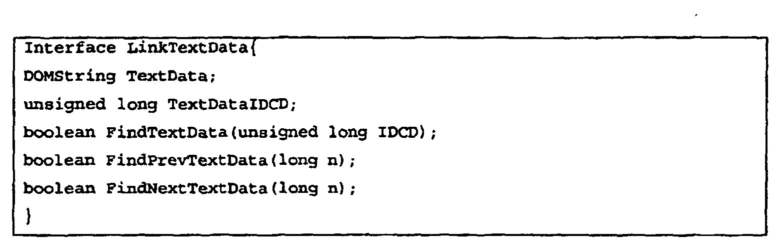

Accordingly, if an identifier code that is the same as an identifier code of text data, which is desired to be found using a link tag, is found in the file DVD_ENAV.IFO, a start address of a relevant item text is found and the text data is retrieved, or text data, which is recorded at an n-th place either before or behind a position where text data that was found previously is recorded, can be retrieved.

Figure 6 shows an example of a directory structure of a disc which does not support an interactive mode. Referring to Figure 6, a root directory includes a video directory VIDEO_TS containing AV data. The video directory VIDEO_TS is provided with a file VIDEO_TS.IFO which contains information for controlling reproducing each video title recorded on a disc. An identifier of a disc or video title is recorded in the file VIDEO_TS.IFO. The remaining data configuration is the same as that shown in Figure 4, and thus description thereof will be omitted.

The root directory shown in Figure 6 does not include an interactive directory which stores information for supporting an interactive mode. In other words, the reproducing control file DVD_ENAV.IFO and the initial startup markup document INDEX.XML are not stored in the disc.

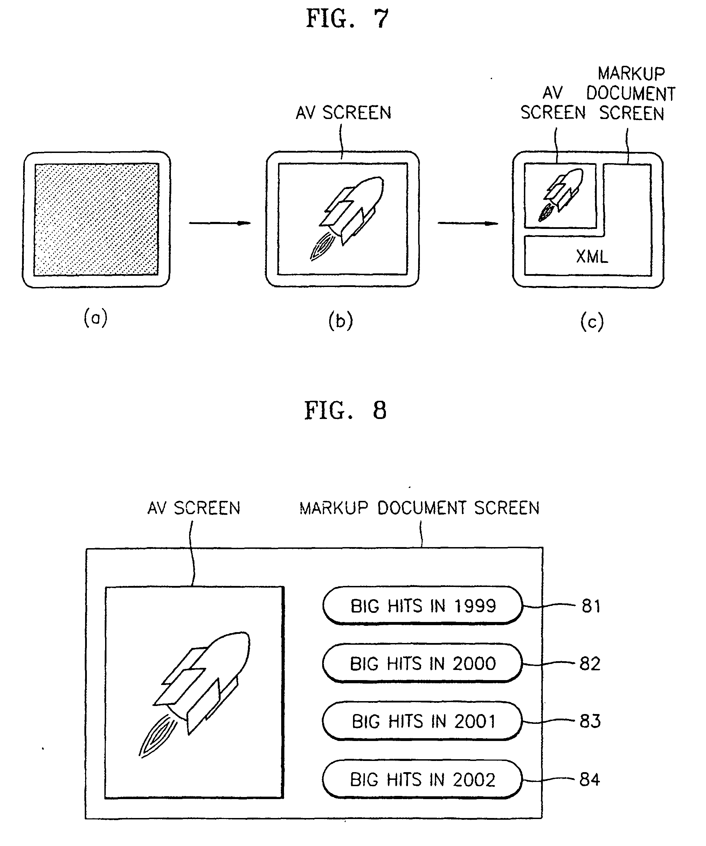

Figure 7 is a schematic diagram explaining a procedure for reproducing contents in an interactive mode from a disc that does not support the interactive mode. Referring to Figure 7, when a user inserts a normal disc into a reproducing apparatus according to the present invention, the reproducing apparatus reproduces a video title recorded on the disc in a video mode. Then, an empty screen, on which nothing is displayed, as shown in Figure 7(a), is converted into an AV screen, on which the video title is reproduced, as shown in Figure 7(b). If the user presses the Content Info 50 on the remote controller 400, the reproducing apparatus downloads a reproducing control file and a markup document from the outside and recognizes as if the files DVD_ENAV.IFO and INDEX.XML exist for the video title so that reproducing is performed in a interactive mode. The reproducing control file and the markup document for the interactive mode may be downloaded in various orders. Consequently, an AV screen and a markup document screen are simultaneously displayed in the interactive mode, as shown in Figure 7(c).

The following is an example of the file INDEX.XML that is downloaded from the Internet.

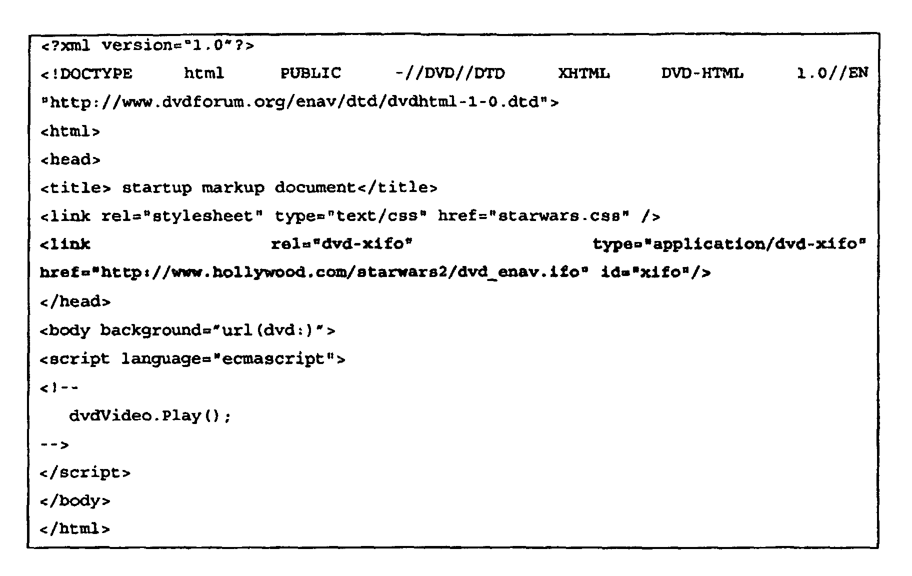

In the above source code, <link rel="dvd-xifo" type="application/dvd-xifo"href="http://www.hollywood.com/starwars2/dvd_enav.ifo" id="xifo"/> instructs to read the file DVD_ENAV.IFO, which is stored in a designated universal resource locator (URL), i.e., http://www.hollywood.com/starwars2/dvd_enav.ifo, and reproduce a relevant video title based on the read file DVD_ENAV.IFO.

Alternatively, instead of a link tag, API as shown below may be used to retrieve a reproducing control file.

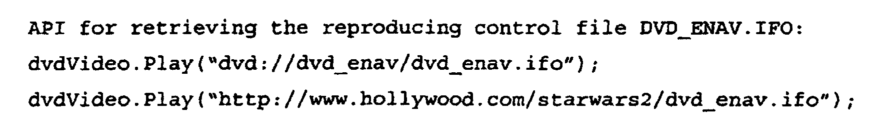

Furthermore, a disc producer can intentionally insert <link rel="dvd-xifo" type="application/dvd-xifo" href="http://www.tristar.com/forest2003.ifo"/> into not the file DVD_ENAV.IFO but a markup document within the interactive directory DVD_ENAV on a disc during an authoring process in order to instruct to download a reproducing control file from a particular URL. This method can be used to perform reproducing in the interactive mode by providing a reproducing control file through a producer server apparatus every time.

Furthermore, a markup document, which contains information for linking a new reproducing control file, is recorded on a disc during production of the disc in advance anticipating a new reproducing control configuration, which is to be produced after the production of the disc, so that when a video title and the markup document are simultaneously reproduced in an interactive mode, a new markup document screen having an AV screen, in which the video title is displayed based on the new reproducing control file obtained through the link information recorded on the disc, can be displayed.

Figure 8 is a schematic diagram explaining a method of updating content displayed on an interactive mode reproducing screen. Referring to Figure 8, anchors 81, 82, 83, and 84 are displayed on a markup document screen which is displayed together with an AV screen. It is assumed that a disc is produced in March, 2001. If a user selects the anchor 81 indicating big hits in 1999 or the anchor 82 indicating big hits in 2000, relevant content can be reproduced based on the reproducing control file DVD_ENAV.IFO that is recorded on the disc. However, reproducing control files, which are to be linked to the anchor 83 indicating big hits in 2001 and the anchor 84 indicating big hits in 2002, cannot be created when the disc is produced because a reproducing control configuration to be used in the future cannot be estimated. In this case, a disc producer can make the anchors 83 and 84 in advance and puts new reproducing control files into a server apparatus of a relevant URL so that an AV screen embedded in a markup document screen can be updated by reproducing a relevant video title based on the new reproducing control files. In addition, information indicating whether a reproducing control file has been made for the purpose of reproducing control may be embedded into the reproducing control file in order to allow a reproducing apparatus to determine whether the downloaded file is to be used for reproducing control or as text data information. In other words, when a user selects the anchor 83 or 84, just text data can be read but an interactive mode screen is not displayed until the file linked to the URL is determined as a reproducing control file. After a file, which contains new reproducing control information instructing reproducing control, is put into the server apparatus of the URL, content complying with the new reproducing control configuration can be displayed.

The following description concerns a reproducing method according to a preferred embodiment of the present invention based on the above structure.

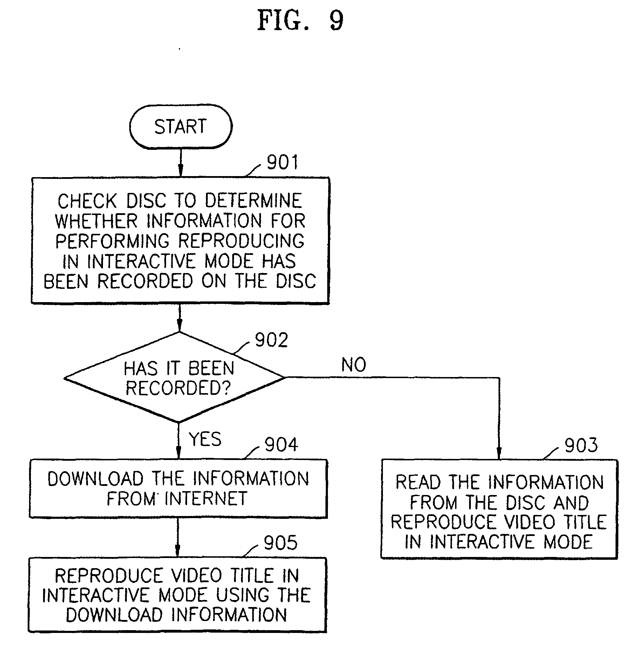

Figure 9 is a flowchart of a reproducing method according to an embodiment of the present invention. Referring to Figure 9, if a user inserts the disc 100 of Figure 2 into a disc deck provided in the reproducing apparatus 200, the presentation engine 5 checks to determine whether information, which is necessary for performing reproducing in an interactive mode, that is, a reproducing control file and a markup document have been recorded on the disc 100 in step 901. If it is determined that the reproducing control file and the markup document have been recorded on the disc 100 in step 902, they are read to reproduce a relevant video title in an interactive mode in step 903. If it is determined that the reproducing control file and the markup document have not been recorded on the disc 100 in step 902, the network data transceiver 6 downloads the reproducing control file and the markup document from the Internet and stores them in the cache memory 3 in step 904. A disc identifier or video title identifier, which is recorded on the disc 100 in order to identify a disc or video title, is used as a key value for downloading the reproducing control file and the markup document for a particular video title. The presentation engine 5 reproduces the video title in an interactive mode, using the reproducing control file and the markup document stored in the cache memory 3, in step 905.

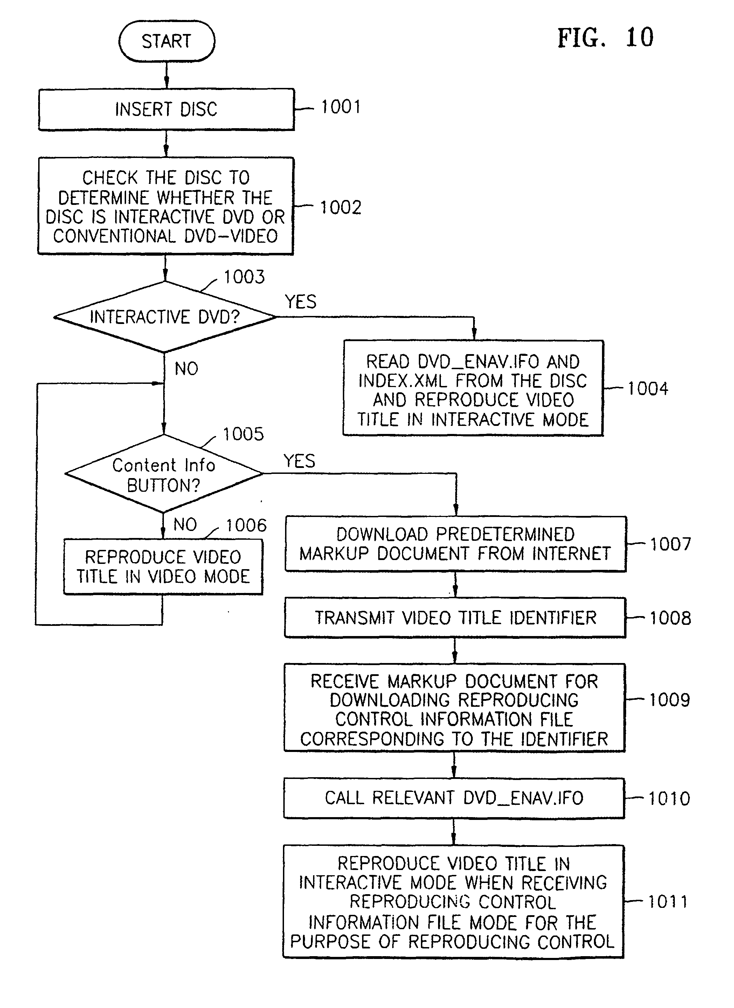

Figure 10 is a flowchart of a reproducing method according to another embodiment of the present invention. Referring to Figure 10, a user inserts an interactive DVD or a conventional DVD-video into the reproducing apparatus 200 in step 1001. The reproducing apparatus 200 checks the disc to determine whether the disc is an interactive DVD or a conventional DVD-video in step 1002. If it is determined that the disc is an interactive DVD in step 1003, information for reproducing in an interactive mode, which is composed of a reproducing control file DVD_ENAV.IFO and an initial startup markup document INDEX.XML, is read from the disc so as to reproduce a relevant video title in an interactive mode in step 1004. If it is determined that the disc is a conventional DVD-video in step 1003, and if the interactive mode is not selected in step 1005, the video title is reproduced in a video mode in step 1006.

If it is determined that the disc is a conventional DVD-video in step 1003, and if the interactive mode is selected, for example, if the user presses the Content Info 50 provided on the remote controller 400 in step 1005, the reproducing apparatus 200 accesses a predetermined interactive server apparatus through Internet, using the network data transceiver 6, and downloads a predetermined markup document from the Internet in step 1007. The downloaded markup document contains a client execution code for recognizing a disc identifier of the DVD-video inserted into the reproducing apparatus 200 or a video title identifier (e.g., ISRC) of a video title desired to be reproduced. The client execution code is a source code in script language. However, the client execution code may be composed in another program language which can be executed in the presentation engine 5. Here, the disc identifier or the video title identifier is recorded in a file VIDEO_TS.IFO. The client execution code is executed in the presentation engine 5 so that the disc identifier or the video title identifier is read, and the network data transceiver 6 transmits the identifier to the interactive server apparatus in step 1008. The interactive server apparatus transmits a markup document, which has a similar function to a markup document INDEX.XML for downloading a new reproducing control file corresponding to the identifier, to the network data transceiver 6 in step 1009. The markup document is linked to the reproducing control file through a link tag or contains an execution code using API for downloading the reproducing control file. The reproducing control file is downloaded in step 1010. Here, the reproducing control file must contain information indicating the reproducing control file is made for the purpose of reproducing control. In the meantime, the reproducing control file may contain URL information, which indicates the location of a new markup document that is necessary for reproducing the video title in the interactive mode. That is, the reproducing control file may designate the location of the initial startup markup document INDEX.XML. The presentation engine 5 analyzes the downloaded reproducing control file, receives the new markup document necessary for reproducing in the interactive mode, and reproduces the video title and the markup document in the interactive mode in step 1011. The steps 1007 and 1008 may be combined into a single step, which is followed by the step 1009. For example, the network data transceiver 6 can transmit the disc identifier or the video title identifier to the interactive server apparatus, and the interactive server apparatus can immediately transmit the markup document for downloading the reproducing control file to the reproducing apparatus 200 in response to the identifier.

In the above embodiments, content recorded on a disc is a video title. However, the present invention can also be applied to other various types of contents such as audio titles and electronic books.

As described above, according to the present invention, even if information for reproducing content in an interactive mode is not recorded on a disc, the content can be reproduced in the interactive mode. In addition, by modifying and updating a reproducing control file and a markup document which are stored in a server apparatus, a content provider can provide the latest information and allow content to be reproduced in a new format. Furthermore, since link information concerning a new reproducing control file which will be provided in the future is recorded on a disc in advance, content recorded on the disc can be reproduced based on the new reproducing control file so that content of an interactive screen can be updated.

Although a few preferred embodiments have been shown and described, it will be appreciated by those skilled in the art that various changes and modifications might be made without departing from the scope of the invention, as defined in the appended claims.

## Claims

1. A method of reproducing content from an information storage medium, comprising the steps of:
reproducing the content from the information storage medium;
**characterised by**:
(a) receiving reproducing control information, which is necessary for reproducing the content in an interactive mode, from Internet; and
(b) reproducing the content from the information storage medium in the interactive mode according to the received reproducing control information.

2. The method of claim 1, wherein the step (a) comprises receiving the reproducing control information from the internet or reading the reproducing control information from the information storage medium, or a combination of both, and the step (b) comprises reproducing the content based on the received and/or read reproducing control information.

3. The method of claim 2, wherein the step (a) comprises the steps of:
(a1) determining whether the reproducing control information for reproducing the content in the interactive mode has been recorded on the information storage medium; and
(a2) requesting and receiving the reproducing control information from a predetermined server apparatus when it is determined that the reproducing control information has not been recorded on the information storage medium.

4. The method of claim 3, wherein the step (a2) comprises the steps of:
(a21) transmitting an identifier of the content to the server apparatus; and
(a22) receiving at least one among a reproducing control file and a markup document, which correspond to the identifier, from the server apparatus.

5. The method of claim 4, wherein the information storage medium stores a markup document that contains information instructing to download a reproducing control file from the server apparatus so that an interactive screen is updated whenever the reproducing control file in the server apparatus is updated.

6. The method of claim 5, wherein a markup document that contains information for linking a new reproducing control file is recorded in the information storage medium during production of the information storage medium in advance anticipating a new reproducing control configuration, which is to be produced after the production of the information storage medium, so that a new interactive screen can be displayed when a video title recorded in the information storage medium is reproduced together with the markup document in the interactive mode.

7. The method of claim 1, wherein the step (a) comprises requesting and receiving the reproducing control information from the internet.

8. The method of claim 7, wherein the content is a video title, and the information storage medium is a disc.

9. The method of claim 8, wherein the step (a) comprises the step of (a1) requesting and receiving a reproducing control file and a markup document, which are necessary for reproducing the video title in the interactive mode.

10. The method of claim 9, wherein the step (a1) comprises the steps of:
(a11) transmitting an identifier of the video title to the server apparatus; and
(a12) receiving at least one among the reproducing control file and the markup document, which correspond to the identifier.

11. The method of claim 10, wherein the step (all) comprises receiving a markup document, which contains a client execution code for recognizing the identifier of the video title, from the server apparatus.

12. The method of claim 11, wherein the step (a12) comprises the steps of:
(a121) receiving the markup document for downloading the reproducing control file; and
(a122) receiving the reproducing control file that is linked to the markup document received in step (a121).

13. The method of claim 12, wherein the markup document received in step (a121) contains either a link tag that is linked to the reproducing control file or an execution code that calls application program interface (API) for retrieving the reproducing control file.

14. The method of claim 13, wherein the link tag is used to retrieve text data.

15. The method of claim 14, wherein the text data, which has the same identifier code as text data desired to be found using the link tag, is retrieved, or text data, which is recorded at an n-th place either before or behind a position of previously found text data, is retrieved.

16. The method of claim 13, 14 or 15, wherein the reproducing control file contains designation information designating that the reproducing control file is made for the purpose of reproducing control.

17. The method of claim 16, wherein it is determined whether the received reproducing control file is to be used for reproducing control or used as text data information based on the designation information.

18. The method of claim 16 or 17, wherein the received reproducing control file is used for reading text data until it is determined that the reproducing control file is made for the purpose of reproducing control based on the designation information.

19. An apparatus for reproducing content from an information storage medium (100), the apparatus comprising:
a network data transceiver (6);
**characterised by**:
the network data transceiver being arranged for receiving reproducing control information which is necessary for reproducing the content in an interactive mode, from the outside through Internet, wherein the apparatus reproduces the content in the interactive mode according to the reproducing control information received through the network data transceiver (6).

20. The apparatus of claim 19, wherein the apparatus comprises:
a reader (1) that reads the content from the information storage medium; and
a decoder (4) that decodes the read content;
wherein the apparatus reproduces the content in the interactive mode using a combination of the content read from the information storage medium and/or the reproducing control information received through the network data transceiver (6).

21. The apparatus of claim 20, wherein the reproducing control information necessary for reproducing in the interactive mode comprises a reproducing control file for reproducing the content and a markup document that is displayed together with the content, and the apparatus further comprises:
a presentation engine (5) that analyzes the reproducing control file and the markup document to perform or reproduce them; and
a blender (7) that blends the decoded content and the reproduced markup document.

22. The apparatus of claim 20 or 21, wherein the network data transceiver (6) transmits an identifier of the content to a server apparatus and receives interactive content corresponding to the identifier from the server apparatus.

23. The apparatus of claim 22, wherein the information storage medium stores a markup document, which contains information instructing to download the reproducing control file from the server apparatus, so that an interactive screen is updated whenever the reproducing control file is updated in the server apparatus.

24. The apparatus of claim 23, wherein a markup document that contains information for linking a new reproducing control file is recorded in the information storage medium during production of the information storage medium in advance anticipating a new reproducing control configuration, which is to be produced after the production of the information storage medium, so that a new interactive screen can be displayed when a video title recorded in the information storage medium is reproduced together with the markup document in the interactive mode.

25. The apparatus of claim 19, wherein the content is a video title and the information storage medium is a disc, and the network data transceiver (6) requests and receives the reproducing control information, which is necessary for reproducing the video title in the interactive mode, from the internet, and the video title is reproduced in the interactive mode based on the received reproducing control information.

26. The apparatus of claim 25, wherein the network data transceiver (6) requests and receives a reproducing control file and a markup document, which are necessary for reproducing the video title in the interactive mode, from a server apparatus.

27. The apparatus of claim 25 or 26, wherein the network data transceiver (6) transmits an identifier of the video title to the server apparatus and receives the reproducing control file and the markup document which correspond to the identifier.

28. The apparatus of claim 25, 26 or 27, wherein the network data transceiver (6) receives a markup document, which contains a client execution code for recognizing the identifier of the video title, from the server apparatus.

29. The apparatus of claim 28, wherein the network data transceiver (6) receives the markup document for downloading the reproducing control file and receives the reproducing control file that is linked to the received markup document, and an initial startup markup document is set in the received reproducing control file.

30. The apparatus of claim 29, wherein the received markup document contains either a link tag that is linked to the reproducing control file or an execution code that calls application program interface (API) for retrieving the reproducing control file.

31. The apparatus of claim 30, wherein the link tag is used to retrieve text data.

32. The apparatus of claim 31, wherein the text data, which has the same identifier code as text data desired to be found using the link tag, is retrieved, or text data, which is recorded at an n-th place either before or behind a position of previously found text data, is retrieved.

33. The apparatus of claim 30, 31 or 32, wherein the reproducing control file contains designation information designating that the reproducing control file is made for the purpose of reproducing control.

34. The apparatus of claim 33, wherein it is determined whether the received reproducing control file is to be used for reproducing control or used as text data information based on the designation information.

35. The apparatus of claim 34, wherein the received reproducing control file is used for reading text data until it is determined that the reproducing control file is made for the purpose of reproducing control based on the designation information.

## Patentansprüche

1. Verfahren zur Wiedergabe von Inhalt von einem Informationsaufzeichnungsmedium, die folgenden Schritte umfassend:
Wiedergabe des Inhalts von dem Informationsaufzeichnungsmedium,
**gekennzeichnet durch**:
(a) das Empfangen von Wiedergabesteuerinformation, die zur Wiedergabe des Inhalts in einem interaktiven Modus erforderlich ist, von dem Internet und
(b) die Wiedergabe des Inhalts von dem Informationsaufzeichnungsmedium in dem interaktiven Modus gemäß den empfangenen Wiedergabesteuerinformationen.

2. Verfahren nach Anspruch 1, wobei der Schritt (a) das Empfangen der Wiedergabesteuerinformation von dem Internet oder das Lesen der Wiedergabesteuerinformation von dem Informationsspeichermedium oder eine Kombination von beidem umfasst und der Schritt (b) die Wiedergabe des Inhalts basierend auf der empfangenen und/oder gelesenen Wiedergabesteuerinformation umfasst.

3. Verfahren nach Anspruch 2, wobei der Schritt (a) die folgenden Schritte umfasst:
(a1) Ermitteln, ob die Wiedergabesteuerinformation zur Wiedergabe des Inhalts in dem interaktiven Modus auf dem Informationsspeichermedium aufgezeichnet wurde, und
(a2) Anfordern und Empfangen der Wiedergabesteuerinformation von einer vorgegebenen Server-Vorrichtung, wenn festgestellt wurde, dass die Wiedergabesteuerinformation nicht auf dem Informationsaufzeichnungsmedium aufgezeichnet wurde.

4. Verfahren nach Anspruch 3, wobei der Schritt (a2) die folgenden Schritte umfasst:
(a2.1) Übertragen einer Kennung des Inhalts zu der Server-Vorrichtung und
(a2.2) Empfangen wenigstens einer Wiedergabesteuerdatei und eines Auszeichnungssprache-Dokuments, die der Kennung von der Server-Vorrichtung entsprechen.

5. Verfahren nach Anspruch 4, wobei das Informationsspeichermedium ein Auszeichnungssprache-Dokument, das Information, die anweist, eine Wiedergabesteuerdatei von der Server-Vorrichtung herunterzuladen, enthält, speichert, so dass ein interaktiver Bildschirm, immer wenn die Wiedergabesteuerdatei in der Server-Vorrichtung aktualisiert wird, aktualisiert wird.

6. Verfahren nach Anspruch 5, wobei ein Auszeichnungssprache-Dokument, das Informationen zum Verknüpfen einer neuen Wiedergabesteuerdatei enthält, in dem Informationsspeichermedium während der Herstellung des Informationsaufzeichnungsmediums in Erwartung einer neuen Wiedergabesteuerkonfiguration, die nach der Herstellung des Informationsspeichermediums herzustellen ist, im Voraus aufgezeichnet wird, so dass, wenn ein in dem Informationsspeichermedium aufgezeichneter Videotitel zusammen mit dem Auszeichnungssprache-Dokument in dem interaktiven Modus wiedergegeben wird, ein neuer interaktiver Bildschirm angezeigt werden kann.

7. Verfahren nach Anspruch 1, wobei der Schritt (a) das Anfordern und das Empfangen der Wiedergabesteuerinformation von dem Internet umfasst.

8. Verfahren nach Anspruch 7, wobei der Inhalt ein Videotitel ist und das Informationsspeichermedium eine Platte ist.

9. Verfahren nach Anspruch 8, wobei der Schritt (a) den Schritt (a1), Anfordern und Empfangen einer Wiedergabesteuerdatei und eines Auszeichnungssprache-Dokuments, die zur Wiedergabe des Videotitels in dem interaktiven Modus erforderlich sind, umfasst.

10. Verfahren nach Anspruch 9, wobei der Schritt (a1) die folgenden Schritte umfasst:
(a1.1) Übertragen einer Kennung des Videotitels zu der Server-Vorrichtung und
(a1.2) Empfangen wenigstens einer Wiedergabesteuerdatei und eines Auszeichnungssprache-Dokuments, die der Kennung entsprechen.

11. Verfahren nach Anspruch 10, wobei der Schritt (a1.1) das Empfangen eines Auszeichnungssprache-Dokuments, das einen Client-Ausführungscode zum Erkennen der Kennung des Videotitels enthält, von der Server-Vorrichtung umfasst.

12. Verfahren nach Anspruch 11, wobei der Schritt (a1.2) die folgenden Schritte umfasst:
(a1.2.1) Empfangen des Auszeichnungssprache-Dokuments zum Herunterladen der Wiedergabesteuerdatei und
(a1.2.2) Empfangen der Wiedergabesteuerdatei, die mit dem Auszeichnungssprache-Dokument, das in Schritt (a1.2.1) empfangen wurde, verknüpft ist.

13. Verfahren nach Anspruch 12, wobei das in dem Schritt (a1.2.1) empfangene Auszeichnungssprache-Dokument entweder ein Verknüpfungs-Tag, das mit der Wiedergabesteuerdatei verknüpft ist, oder einen Ausführungscode, der eine Anwendungsprogrammschnittstelle (API) zum Abrufen der Wiedergabesteuerdatei anweist, enthält.

14. Verfahren nach Anspruch 13, wobei das Verknüpfungs-Tag verwendet wird, um Textdaten abzurufen.

15. Verfahren nach Anspruch 14, wobei die Textdaten, die denselben Kennungscode, wie die Textdaten, von denen erwünscht ist, sie unter Verwendung des Tags zu finden, enthalten, abgerufen werden oder Textdaten, die auf einer n-ten Stelle entweder vor oder hinter einer Position der vorhergehend gefundenen Textdaten aufgezeichnet sind, abgerufen werden.

16. Verfahren nach Anspruch 13, 14 oder 15, wobei die Wiedergabesteuerdatei Kennzeichnungsinformation, die kennzeichnet, dass die Wiedergabesteuerdatei für den Zweck der Wiedergabesteuerung vorgesehen ist, enthält.

17. Verfahren nach Anspruch 16, wobei basierend auf der Kennzeichnungsinformation festgestellt wird, ob die empfangene Wiedergabesteuerdatei zur Wiedergabesteuerung oder als Textdateninformation zu verwenden ist.

18. Verfahren nach Anspruch 16 oder 17, wobei die empfangene Wiedergabesteuerdatei zum Lesen von Textdaten verwendet wird, bis basierend auf der Kennzeichnungsinformation festgestellt wird, dass die Wiedergabesteuerdatei für den Zweck der Wiedergabesteuerung vorgesehen ist.

19. Vorrichtung zur Wiedergabe von Inhalt von einem Informationsspeichermedium (100), die Vorrichtung umfasst:
einen Netzwerkdaten-Sender/-Empfänger (6),
**dadurch gekennzeichnet, dass**
der Netzwerkdaten-Sender/-Empfänger zum Empfangen von Wiedergabesteuerinformation, die für die Wiedergabe des Inhalts in einem interaktiven Modus erforderlich ist, von außen durch das Internet eingerichtet ist, wobei die Vorrichtung den Inhalt entsprechend den durch den Netzwerkdaten-Sender/-Empfänger (6) empfangenen Wiedergabesteuerinformationen in dem interaktiven Modus wiedergibt.

20. Vorrichtung nach Anspruch 19, wobei die Vorrichtung umfasst:
einen Leser (1), der den Inhalt von dem Informationsspeichermedium liest, und
einen Decoder (4), der den gelesenen Inhalt decodiert,
wobei die Vorrichtung den Inhalt unter Verwendung einer Kombination des von dem Informationsspeichermedium gelesenen Inhalts und/oder der durch den Netzwerkdaten-Sender/-Empfänger (6) empfangenen Wiedergabesteuerinformation in dem interaktiven Modus wiedergibt.

21. Vorrichtung nach Anspruch 20, wobei die für die Wiedergabe in dem interaktiven Modus erforderliche Wiedergabesteuerinformation eine Wiedergabesteuerdatei zur Wiedergabe des Inhalts und ein Auszeichnungssprache-Dokument, das zusammen mit dem Inhalt angezeigt wird, umfasst und die Vorrichtung des Weiteren Folgendes umfasst:
eine Darstellungsmaschine (5)m die die Wiedergabesteuerdatei und das Auszeichnungssprache-Dokument analysiert, um diese durchzuführen oder wiederzugeben, und
einen Mischer (7), der den decodierten Inhalt und das Auszeichnungssprache-Dokument mischt.

22. Vorrichtung nach Anspruch 20 oder 21, wobei der Netzwerkdaten-Sender/-Empfänger (6) eine Kennung des Inhalts zu einer Server-Vorrichtung sendet und einen der Kennung von der Server-Vorrichtung entsprechenden interaktiven Inhalt empfängt.

23. Vorrichtung nach Anspruch 22, wobei das Informationsspeichermedium ein Auszeichnungssprache-Dokument, das Information, die anweist, eine Wiedergabesteuerdatei von der Server-Vorrichtung herunterzuladen, enthält, speichert, so dass ein interaktiver Bildschirm, immer wenn die Wiedergabesteuerdatei in der Server-Vorrichtung aktualisiert wird, aktualisiert wird.

24. Vorrichtung nach Anspruch 23, wobei ein Auszeichnungssprache-Dokument, das Informationen zum Verknüpfen einer neuen Wiedergabesteuerdatei enthält, in dem Informationsspeichermedium während der Herstellung des Informationsaufzeichnungsmediums in Erwartung einer neuen Wiedergabesteuerkonfiguration, die nach der Herstellung des Informationsspeichermediums herzustellen ist, im Voraus aufgezeichnet wird, so dass, wenn ein in dem Informationsspeichermedium aufgezeichneter Videotitel zusammen mit dem Auszeichnungssprache-Dokument in dem interaktiven Modus wiedergegeben wird, ein neuer interaktiver Bildschirm angezeigt werden kann.

25. Vorrichtung nach Anspruch 19, wobei der Inhalt ein Videotitel ist und das Informationsspeichermedium eine Platte ist und der Netzwerkdaten-Sender/-Empfänger (6) die Wiedergabesteuerinformation, die für die Wiedergabe des Videotitels in der interaktiven Form erforderlich ist, anfordert und empfängt und der Videotitel basierend auf der empfangenen Wiedergabesteuerinformation in dem interaktiven Modus wiedergegeben wird.

26. Vorrichtung nach Anspruch 25, wobei der Netzwerkdaten-Sender/-Empfänger (6) eine Wiedergabesteuerdatei und ein Auszeichnungssprache-Dokument, die für die Wiedergabe des Videotitels in dem interaktiven Modus erforderlich sind, von einer Server-Vorrichtung anfordert und empfängt.

27. Vorrichtung nach Anspruch 25 oder 26, wobei der Netzwerkdaten-Sender/-Empfänger (6) eine Kennung des Videotitels zu der Server-Vorrichtung überträgt und die Wiedergabesteuerdatei und das Auszeichnungssprache-Dokument, die der Kennung entsprechen, empfängt.

28. Vorrichtung nach Anspruch 25, 26 oder 27, wobei der Netzwerkdaten-Sender/-Empfänger (6) ein Auszeichnungssprache-Dokument, das einen Client-Ausführungscode zum Erkennen der Kennung des Videotitels von der Server-Vorrichtung enthält, empfängt.

29. Vorrichtung nach Anspruch 28, wobei der Netzwerkdaten-Sender/-Empfänger (6) das Auszeichnungssprache-Dokument zum Herunterladen der Wiedergabesteuerdatei empfängt und die Wiedergabesteuerdatei, die mit dem empfangenen Auszeichnungssprache-Dokument verknüpft ist, empfängt und in der empfangenen Wiedergabesteuerdatei ein Inbetriebnahme-Auszeichnungssprache-Dokument eingerichtet ist.

30. Vorrichtung nach Anspruch 29, wobei das empfangene Auszeichnungssprache-Dokument entweder ein Verknüpfungs-Tag, das mit der Wiedergabesteuerdatei verknüpft ist, oder einen Ausführungscode, der eine Anwendungsprogrammschnittstelle (API) zum Abrufen der Wiedergabesteuerdatei anweist, enthält.

31. Vorrichtung nach Anspruch 30, wobei das Verknüpfungs-Tag verwendet wird, um Textdaten abzurufen.

32. Vorrichtung nach Anspruch 31, wobei die Textdaten, die denselben Kennungscode, wie die Textdaten, von denen erwünscht ist, sie unter Verwendung des Tags zu finden, enthalten, abgerufen werden oder Textdaten, die auf einer n-ten Stelle entweder vor oder hinter einer Position der vorhergehend gefundenen Textdaten aufgezeichnet sind, abgerufen werden.

33. Vorrichtung nach Anspruch 30, 31 oder 32, wobei die Wiedergabesteuerdatei Kennzeichnungsinformation, die kennzeichnet, dass die Wiedergabesteuerdatei für den Zweck der Wiedergabesteuerung vorgesehen ist, enthält.

34. Vorrichtung nach Anspruch 33, wobei basierend auf der Kennzeichnungsinformation festgestellt wird, ob die empfangene Wiedergabesteuerdatei zur Wiedergabesteuerung oder als Textdateninformation zu verwenden ist.

35. Vorrichtung nach Anspruch 34, wobei die empfangene Wiedergabesteuerdatei zum Lesen von Textdaten verwendet wird, bis basierend auf der Kennzeichnungsinformation festgestellt wird, dass die Wiedergabesteuerdatei für den Zweck der Wiedergabesteuerung vorgesehen ist.

## Revendications

1. Procédé de reproduction de contenu depuis une support de mémorisation d'informations, comportant l'étape consistant à :
reproduire le contenu depuis le support de mémorisation d'informations,
**caractérisé par** les étapes consistant à :
(a) recevoir des informations de commande de reproduction, qui sont nécessaires pour reproduire le contenu dans un mode interactif, en provenance d'Internet, et
(b) reproduire le contenu depuis le support de mémorisation d'informations dans le mode interactif conformément aux informations de commande de reproduction reçues.

2. Procédé selon la revendication 1, dans lequel l'étape (a) comporte l'étape consistant à recevoir les informations de commande de reproduction en provenance de l'Internet ou à lire les informations de commande de reproduction depuis le support de mémorisation d'informations, ou une combinaison des deux, et l'étape (b) comporte l'étape consistant à reproduire le contenu sur la base des informations de commande de reproduction reçues et/ou lues.

3. Procédé selon la revendication 2, dans lequel l'étape (a) comporte les étapes consistant à :
(a1) déterminer si les informations de commande de reproduction destinées à reproduire le contenu dans le mode interactif ont été enregistrées sur le support de mémorisation d'informations, et
(a2) demander et recevoir les informations de commande de reproduction en provenance d'un dispositif de serveur prédéterminé lorsqu'il est déterminé que les informations de commande de reproduction n'ont pas été enregistrées sur le support de mémorisation d'informations.

4. Procédé selon la revendication 3, dans lequel l'étape (a2) comporte les étapes consistant à :
(a21) transmettre un identifiant du contenu au dispositif de serveur, et
(a22) recevoir au moins l'un parmi un fichier de commande de reproduction et un document de balisage, lesquels correspondent à l'identifiant, en provenance du dispositif de serveur.

5. Procédé selon la revendication 4, dans lequel le support de mémorisation d'informations mémorise un document de balisage qui contient des informations ordonnant de télécharger un fichier de commande de reproduction depuis le dispositif de serveur de sorte qu'un écran interactif est mis à jour à chaque fois que le fichier de commande de reproduction dans le dispositif de serveur est mis à jour.

6. Procédé selon la revendication 5, dans lequel un document de balisage qui contient des informations pour associer un nouveau fichier de commande de reproduction est enregistré dans le support de mémorisation d'informations pendant la production du support de mémorisation d'informations en anticipant une nouvelle configuration de commande de reproduction, qui doit être produite après la production du support de mémorisation d'informations, de sorte qu'un nouvel écran interactif peut être affiché lorsqu'un titre vidéo enregistré dans le support de mémorisation d'informations est reproduit conjointement avec le document de balisage dans le mode interactif.

7. Procédé selon la revendication 1, dans lequel l'étape (a) comporte la demande et la réception des informations de commande de reproduction en provenance de l'Internet.

8. Procédé selon la revendication 7, dans lequel le contenu est un titre vidéo, et le support de mémorisation d'informations est un disque.

9. Procédé selon la revendication 8, dans lequel l'étape (a) comporte l'étape (a1) consistant à demander et à recevoir un fichier de commande de reproduction et un document de balisage, qui sont nécessaires pour reproduire le titre vidéo dans le mode interactif.

10. Procédé selon la revendication 9, dans lequel l'étape (a1) comporte les étapes consistant à :
(a11) transmettre un identifiant du titre vidéo au dispositif de serveur, et
(a12) recevoir au moins l'un parmi le fichier de commande de reproduction et le document de balisage, lesquels correspondent à l'identifiant.

11. Procédé selon la revendication 10, dans lequel l'étape (a11) comporte la réception d'un document de balisage, lequel contient un code d'exécution client pour reconnaître l'identifiant du titre vidéo, en provenance du dispositif de serveur.

12. Procédé selon la revendication 11, dans lequel l'étape (a12) comporte les étapes consistant à :
(a121) recevoir le document de balisage pour télécharger le fichier de commande de reproduction, et
(a122) recevoir le fichier de commande de reproduction qui est associé au document de balisage reçu à l'étape (a121).

13. Procédé selon la revendication 12, dans lequel le document de balisage reçu à l'étape (a121) contient une étiquette de liaison qui est associée au fichier de commande de reproduction ou un code d'exécution qui appelle une interface de programmation d'application (API) pour rapatrier le fichier de commande de reproduction.

14. Procédé selon la revendication 13, dans lequel l'étiquette de liaison est utilisée pour rapatrier des données textuelles.

15. Procédé selon la revendication 14, dans lequel les données textuelles, qui ont le même code d'identifiant que des données textuelles voulues à trouver en utilisant l'étiquette de liaison, sont rapatriées, ou des données textuelles, qui sont enregistrées à une n-ième place avant ou après une position de données textuelles précédemment trouvées, sont rapatriées.

16. Procédé selon la revendication 13, 14 ou 16, dans lequel le fichier de commande de reproduction contient des informations de désignation indiquant que le fichier de commande de reproduction est créé dans le but d'une commande de reproduction.

17. Procédé selon la revendication 16, dans lequel il est déterminé si le fichier de commande de reproduction reçu doit être utilisé pour une commande de reproduction ou utilisé en tant qu'informations de données textuelles sur la base des informations de désignation.

18. Procédé selon la revendication 16 ou 17, dans lequel le fichier de commande de reproduction reçu est utilisé pour lire des données textuelles jusqu'à ce qu'il soit déterminé que le fichier de commande de reproduction est créé dans le but d'une commande de reproduction sur la base des informations de désignation.

19. Dispositif destiné à reproduire un contenu depuis un support de mémorisation d'informations (100), le dispositif comportant :
un émetteur-récepteur de données de réseau (6),
**caractérisé en ce que** :
l'émetteur-récepteur de données de réseau est agencé pour recevoir des informations de commande de reproduction qui sont nécessaires pour reproduire le contenu dans un mode interactif, en provenance de l'extérieur via Internet, dans lequel le dispositif reproduit le contenu dans le mode interactif conformément aux informations de commande de reproduction reçues via l'émetteur-récepteur de données de réseau (6).

20. Dispositif selon la revendication 19, dans lequel le dispositif comporte :
un lecteur (1) qui lit le contenu depuis le support de mémorisation d'informations ; et
un décodeur (4) qui décode le contenu lu,
dans lequel le dispositif reproduit le contenu dans le mode interactif en utilisant une combinaison du contenu lu depuis le support de mémorisation d'informations et/ou des informations de commande de reproduction reçues via l'émetteur-récepteur de données de réseau (6).

21. Dispositif selon la revendication 20, dans lequel les informations de commande de reproduction nécessaires pour effectuer une reproduction dans le mode interactif comportent un fichier de commande de reproduction pour reproduire le contenu et un document de balisage qui est affiché conjointement avec le contenu, et le dispositif comporte en outre :
un moteur de présentation (5) qui analyse le fichier de commande de reproduction et le document de balisage pour exécuter ou reproduire ceux-ci, et
un mélangeur (7) qui mélange le contenu décodé et le document de balisage reproduit.

22. Dispositif selon la revendication 20 ou 21, dans lequel l'émetteur-récepteur de données de réseau (6) transmet un identifiant du contenu à un dispositif de serveur et reçoit un contenu interactif correspondant à l'identifiant en provenance du dispositif de serveur.

23. Dispositif selon la revendication 22, dans lequel le support de mémorisation d'informations mémorise un document de balisage, lequel contient des informations ordonnant de télécharger le fichier de commande de reproduction depuis le dispositif de serveur; de sorte qu'un écran interactif est mis à jour à chaque fois que le fichier de commande de reproduction est mis à jour dans le dispositif de serveur.

24. Dispositif selon la revendication 23, dans lequel un document de balisage qui contient des informations pour associer un nouveau fichier de commande de reproduction est enregistré dans le support de mémorisation d'informations pendant la production du support de mémorisation d'informations en anticipant une nouvelle configuration de commande de reproduction, laquelle doit être produite après la production du support de mémorisation d'informations, de sorte qu'un nouvel écran interactif peut être affiché lorsqu'un titre vidéo enregistré dans le support de mémorisation d'informations est reproduit conjointement avec le document de balisage dans le mode interactif.

25. Dispositif selon la revendication 19, dans lequel le contenu est un titre vidéo et le support de mémorisation d'informations est un disque, et l'émetteur-récepteur de données de réseau (6) demande et reçoit les informations de commande de reproduction, lesquelles sont nécessaires pour reproduire le titre vidéo dans le mode interactif, en provenance de l'Internet, et le titre vidéo est reproduit dans le mode interactif sur la base des informations de commande de reproduction reçues.

26. Dispositif selon la revendication 25, dans lequel l'émetteur-récepteur de données de réseau (6) demande et reçoit un fichier de commande de reproduction et un document de balisage, lesquels sont nécessaires pour reproduire le titre vidéo dans le mode interactif, en provenance d'un dispositif de serveur.

27. Dispositif selon la revendication 25 ou 26, dans lequel l'émetteur-récepteur de données de réseau (6) transmet un identifiant du titre vidéo au dispositif de serveur et reçoit le ficher de commande de reproduction et le document de balisage qui correspondent à l'identifiant.

28. Dispositif selon la revendication 25, 26 ou 27, dans lequel l'émetteur-récepteur de données de réseau (6) reçoit un document de balisage, qui contient un code d'exécution client pour reconnaître l'identifiant du titre vidéo, en provenance du dispositif de serveur.

29. Dispositif selon la revendication 28, dans lequel l'émetteur-récepteur de données de réseau (6) reçoit le document de balisage pour télécharger le fichier de commande de reproduction et reçoit le fichier de commande de reproduction qui est associé au document de balisage reçu, et un document de balisage de lancement initial est établi dans le fichier de commande de reproduction reçu.

30. Dispositif selon la revendication 29, dans lequel le document de balisage reçu contient une étiquette de liaison qui est associée au fichier de commande de reproduction ou un code d'exécution qui appelle une interface de programmation d'application (API) pour rapatrier le fichier de commande de reproduction.

31. Dispositif selon la revendication 30, dans lequel l'étiquette de liaison est utilisée pour rapatrier des données textuelles.

32. Dispositif selon la revendication 31, dans lequel les données textuelles, qui ont le même code d'identifiant que des données textuelles voulues à trouver en utilisant l'étiquette de liaison, sont rapatriées, ou des données textuelles, qui sont enregistrées à une n-ième place avant ou après une position de données textuelles précédemment trouvées, sont rapatriées.

33. Dispositif selon la revendication 30, 31 ou 32, dans lequel le fichier de commande de reproduction contient des informations de désignation indiquant que le fichier de commande de reproduction est créé dans le but d'une commande de reproduction.

34. Dispositif selon la revendication 33, dans lequel il est déterminé si le fichier de commande de reproduction reçu doit être utilisé pour une commande de reproduction ou utilisé en tant qu'informations de données textuelles sur la base des informations de désignation.

35. Dispositif selon la revendication 34, dans lequel le fichier de commande de reproduction reçu est utilisé pour lire des données textuelles jusqu'à ce qu'il soit déterminé que le fichier de commande de reproduction est créé dans le but d'une commande de reproduction sur la base les informations de désignation.
